# FASCICULE DE BREVET EUROPEEN

(11) **EP 3 602 742 B1**
(45) Date de publication et mention de la délivrance du brevet: **28.04.2021**
(21) Numéro de dépôt: 18714560.2
(22) Date de dépôt: 20.03.2018
(51) Int. Cl.: H01F 7/02, H02K 1/27, H02K 21/12

(54) **STRUCTURE D'AIMANT À PLUSIEURS AIMANTS UNITAIRES INTÉGRÉS DANS UN MAILLAGE**
MAGNETSTRUKTUR MIT EINER VIELZAHL VON IN EINE GITTERSTRUKTUR INTEGRIERTEN EINZELNEN MAGNETEN
MAGNET STRUCTURE HAVING A PLURALITY OF INDIVIDUAL MAGNETS INTEGRATED INTO A MESH STRUCTURE

(30) Priorité: 22.03.2017 FR 1700295; 11.09.2017 FR 1700915
(43) Date de publication de la demande: 05.02.2020
(73) Titulaire: Whylot SAS, 46100 Cambes (FR)
(72) Inventeur: MIHAILA, Vasile, 46100 Figeac (FR); MAYEUR, Loic, 12700 Saint Santin (FR); TIEGNA, Huguette, 46100 Figeac (FR); RAVAUD, Romain, F-46240 Coeur de Causse (FR)
(86) Numéro de dépôt international: PCT/FR2018/000064
(87) Numéro de publication internationale: WO 2018/172635

(56) Documents cités:
- EP-A1- 0 996 212
- EP-A1- 1 780 878
- EP-A1- 2 773 023
- FR-A- 1 475 501
- FR-A1- 2 996 378
- JP-A- 2015 202 514

## Description

La présente invention concerne une structure d'aimant à plusieurs aimants unitaires intégrés dans un maillage. L'invention concerne aussi un actionneur électromagnétique comportant une ou plusieurs de telles structures d'aimant.

La présente invention trouve une application avantageuse mais non limitative pour un actionneur électromagnétique délivrant une forte puissance avec une vitesse de rotation du rotor élevée, ce qui est obtenu par l'utilisation d'une ou de structures d'aimant selon la présente invention. Un tel actionneur électromagnétique peut être utilisé par exemple dans un véhicule automobile totalement électrique ou hybride.

Avantageusement mais non limitativement, l'actionneur peut être un actionneur rotatif pouvant comprendre au moins un rotor encadré par deux stators, ces éléments pouvant se superposer les uns par rapport aux autres en étant séparés par au moins un entrefer sur un même arbre.

Dans des applications à haute vitesse, il est nécessaire d'avoir non seulement un système compact rendu possible par la réduction de la masse et de l'encombrement de l'actionneur électromagnétique pour un rendement optimal, mais également une très bonne tenue mécanique de la partie tournante ou en translation, c'est-à-dire le rotor ou l'élément en translation linéaire, afin d'améliorer la fiabilité du système.

Dans des applications à haute vitesse, il est nécessaire de réduire les pertes pour un rendement optimal. Dans des applications automobiles, la miniaturisation est de plus en plus recherchée. Pour cela, il est important d'avoir un système compact rendu possible par la réduction de la masse et de l'encombrement de l'actionneur, mais également une très bonne tenue mécanique de la partie en déplacement, afin d'améliorer la fiabilité du système.

Pour un actionneur électromagnétique à flux axial, comme exemple non limitatif de la présente invention, le rotor comporte un corps sous forme d'un disque présentant deux faces circulaires reliées par une épaisseur, le disque étant délimité entre une couronne externe et une périphérie interne délimitant un évidement pour un arbre de rotation.

Au moins deux aimants permanents sont appliqués contre au moins une des deux faces circulaires du corps dite face de support. Pour un rotor mono-entrefer destiné à être associé à un stator, une seule face circulaire du corps porte des aimants tandis que, pour un rotor à deux entrefers avec un stator respectif, ce sont les deux faces qui portent des aimants.

Les aimants sont chacun maintenus sur la face ou leur face respective par des moyens de maintien, un intervalle étant laissé entre lesdits au moins deux aimants sur une même face.

Pour un actionneur électromagnétique à flux radial, le rotor comporte un corps cylindrique dont tout le pourtour porte des aimants.

Pour le stator ou chaque stator, ceux-ci portent des éléments de bobinage comprenant une dent portant une bobine, la dent étant encadrée sur chacun de ses côtés par une encoche, un fil métallique bon conducteur étant enroulé sur la dent pour former la bobine.

Quand la série ou les séries de bobinages sont alimentées électriquement, le rotor qui est solidarisé à l'arbre de sortie du moteur est soumis à un couple résultant du champ magnétique, le flux magnétique créé étant un flux axial pour une machine électromagnétique à flux axial et un flux radial pour une machine à flux radial.

Pour un moteur à forte puissance, le rotor tourne à des vitesses de rotation élevées. Le principal désavantage d'un moteur à forte vitesse de rotation réside dans la probabilité élevée de détachement de l'aimant ou des aimants du rotor ainsi que de casse au moins partielle du rotor. Le rotor d'un tel moteur doit donc être apte à supporter des vitesses de rotation élevées.

Le document US-A-2011/0285237 divulgue un moteur à entrefer axial. Le but de ce document est une simplification des étapes de fabrication du rotor tout en empêchant les aimants permanents portés par ce rotor d'être déplacés ou desserrés lors du montage et du fonctionnement du rotor. Les aimants sont logés dans une structure monopièce faite d'une pièce moulée enserrant les aimants.

La pièce moulée présente des rainures séparant les aimants dans lesquelles sont introduites des nervures portées par un corps du rotor, permettant de bloquer la pièce moulée contre un mouvement de déplacement axial. Un maintien radial de la pièce moulée est effectué par des éléments concentriques interne et externe à la pièce moulée.

Ce document se destine donc à des aimants logés dans une pièce moulée et n'est d'aucun enseignement pour les aimants se trouvant séparés les uns des autres. De plus, les nervures ne maintiennent les aimants que par leur action sur la pièce moulée et n'agissent donc pas directement pour le maintien des aimants dans le rotor.

Le document EP-A-1 780 878 décrit une structure d'aimant en trois dimensions constituée d'une pluralité d'aimants unitaires, la structure d'aimant présentant une épaisseur formant sa dimension la plus petite, la structure intégrant au moins un maillage présentant des mailles délimitant chacune un logement pour un aimant unitaire respectif, chaque logement présentant des dimensions internes justes suffisantes pour permettre une introduction d'un aimant unitaire en son intérieur, les mailles étant en matériau isolant renforcé de fibres.

Cependant une telle structure d'aimant n'est pas adaptée pour résister à des vitesses de rotation élevées quand la ou les structures d'aimant sont portées par un rotor.

Le document FR-A-2 996 378 décrit une structure d'aimant comprenant des aimants unitaires. Ces aimants unitaires sont collés par de la résine sans interposition d'un quelconque élément de maintien entre les aimants unitaires. Une telle disposition ne pourrait pas supporter des vitesses élevées de rotation sans perte des aimants lors de la rotation. Le document EP-A-2 773 023 décrit un rotor composite pour un moteur à flux axial, le rotor comprenant un moyen de maintien pour une pluralité d'aimants permanents espacés de manière circonférentielle autour du rotor. Il est prévu un enroulement de recouvrement composé de brins de matériau de renforcement enroulés de manière toroïdale sur ledit moyen de maintien et lesdits aimants. Les brins aident à renforcer le rotor.

Cependant cet enroulement de recouvrement n'est pas appliqué sur chaque aimant individuellement mais sur tous les aimants et le moyen de maintien en formant un tout, les aimants étant de gros aimants en trois dimensions.

Le problème à la base de la présente invention est de concevoir une structure d'aimant pour un actionneur électromagnétique qui puisse supporter des vitesses de travail élevées tout en fournissant un champ magnétique puissant avec un maintien optimal des aimants dans leur support.

A cet effet, la présente invention concerne une structure d'aimant en trois dimensions constituée d'une pluralité d'aimants unitaires, la structure d'aimant présentant une épaisseur formant sa dimension la plus petite, la structure intégrant au moins un maillage présentant des mailles délimitant chacune un logement pour un aimant unitaire respectif, chaque logement présentant des dimensions internes justes suffisantes pour permettre une introduction d'un aimant unitaire en son intérieur, les mailles étant en matériau isolant renforcé de fibres, caractérisé en ce qu'il est laissé un espace entre le logement et l'aimant unitaire rempli par au moins une résine renforcée de fibres, la structure d'aimant comportant une couche de composite non conductrice enrobant les aimants unitaires et le maillage.

Le but de la présente invention est de décomposer un ou des aimants dans un rotor selon l'état de la technique en une pluralité de petits ou micro-aimants. Un aimant de dimensions importantes est sujet à des pertes par courants de Foucault plus importantes que son équivalent en petits ou micro-aimants. L'utilisation de petits aimants ou de micro-aimants permet donc de réduire ces pertes qui sont préjudiciables au fonctionnement du rotor.

Le composite d'enrobage de la structure d'aimant est préféré au fer pour ne pas induire de couple de détente. De plus, sa résistance mécanique peut être élevée et l'enrobage peut se faire aisément notamment par injection du composite sur une disposition d'aimants unitaires maintenus en place les uns par rapport aux autres par un moyen quelconque. Une structure d'aimant ainsi protégée par son enrobage est résistante à des vitesses de rotation élevée et les aimants unitaires sont fermement maintenus en place en étant déjà dans un maillage et collés par une couche de résine.

Le rotor à aimants placés dans des alvéoles de la présente invention est conçu de façon à réduire les pertes dans le rotor avec des moyens de solidarisation permettant de maintenir les aimants et de pallier l'effet de la force axiale ou radiale et de la force centrifuge à très haute vitesse.

La fissuration d'un aimant relativement important est souvent la raison d'un dysfonctionnement d'un actionneur électromagnétique. La présente invention entend éviter ce dommage par la présence d'une pluralité d'aimants unitaires plus petits que l'aimant qu'ils remplacent.

Se pose alors le problème de décollement d'un aimant unitaire de son logement. Ceci est résolu du fait du mode de collage proposé par la présente invention. Le logement est calculé au plus juste pour bien maintenir l'aimant unitaire qu'il reçoit en ne laissant entre eux que la place suffisante pour l'injection de résine. La résine est elle-même renforcée de fibres pour avoir des caractéristiques de tenue mécanique renforcée.

Avantageusement, ledit au moins un maillage est sous forme d'un nid d'abeille présentant des logements de section hexagonale.

Un maillage en nid d'abeille est connu pour renforcer la résistance d'un élément, dans le cas présent une structure d'aimant. Les aimants unitaires sont insérés dans des logements hexagonaux qui assurent leur maintien. Les parois des logements servent d'isolant électrique et la densité des logements dans la structure d'aimant peut être considérablement augmentée. Le maillage en nid d'abeille est en matériau composite isolant renforcé de fibres.

Avantageusement, chaque aimant unitaire est sous la forme d'un plot allongé pénétrant en longueur dans son logement associé s'étendant selon l'épaisseur de la structure, le plot allongé étant cylindrique ou sous forme d'un polyèdre avec au moins une face longitudinale plane et, quand ledit au moins un maillage est sous forme d'un nid d'abeille, chaque plot présente une face longitudinale de forme hexagonale.

La surface de travail de la structure d'aimant est celle qui va être en vis-à-vis des bobines du stator pour un actionneur électrique tournant ou linéaire et de laquelle part le champ magnétique.

Selon sa définition la plus classique, un polyèdre est une forme géométrique à trois dimensions ayant des faces planes polygonales qui se rencontrent selon des segments de droite qu'on appelle arêtes, par exemple un prisme droit ou oblique, un cube ou une pyramide. Dans le cadre de la présente invention, Il est préféré avoir un polyèdre présentant deux surfaces polygonales longitudinales opposées, planes et égales reliées par des arrêtes droites et parallèles tel un polyèdre hexagonal mais ceci n'est pas limitatif, une seule surface longitudinale pouvant être présente, un sommet étant porté par l'autre extrémité du polyèdre.

Ceci permet d'avoir une structure d'aimant présentant de nombreux plots formant des aimants unitaires. Il s'est révélé qu'une structure avec une telle pluralité d'aimants unitaires avait un grand pouvoir d'aimantation tout en présentant une grande résistance, la structure d'aimant présentant une couche de préférence en composite pour l'enrobage des aimants unitaires. Une telle structure d'aimant peut former un pole d'aimant ou être un aimant complet.

Il est connu que, pour obtenir un champ magnétique d'intensité optimale, le volume idéal d'un aimant doit s'approcher d'un cube ou d'un cylindre dont la longueur est égale au diamètre. Il est de connaissance courante qu'augmenter la longueur d'un aimant au-delà n'apporte aucune augmentation du champ magnétique. La démarche de la présente invention va cependant dans le sens contraire de ce préjugé.

La longueur d'un aimant unitaire est sensiblement augmentée par rapport au diamètre ou à une diagonale de sa face longitudinale plane que ne le propose la pratique largement répandue pour répondre à des besoins de résistance mécanique de la structure.

Selon l'invention, il a été découvert qu'une pluralité d'aimants unitaires dans une structure d'aimant donne une structure d'aimant plus résistante qu'un unique aimant de même forme tout en augmentant, de manière surprenante, le champ magnétique délivré par la structure.

Avantageusement, la couche de composite comprend des fibres de renforcement comme des fibres de verre ou des fibres en matière plastique.

Les fibres de renforcement concourent à augmenter la résistance de la structure d'aimant et notamment la rigidité à la flexion et au flambement.

Avantageusement, la structure d'aimant comprend un empilement de deux séries d'aimants unitaires avec chacun un maillage respectif.

Avantageusement, les deux maillages font partie d'un même ensemble, les maillages étant disposés l'un par rapport à l'autre de sorte que chaque aimant unitaire d'une série soit aligné dans le sens de sa longueur avec un aimant unitaire respectif de l'autre série en étant mis bout à bout.

Chaque paire de deux aimants unitaires de séries différentes collés bout à bout par affinité magnétique se comporte comme un aimant simple plus long.

Avantageusement, les deux maillages sont séparés avec une couche de composite intercalée entre les deux maillages.

Ceci permet d'avoir une structure d'aimant pouvant avoir une surface de travail sur deux faces opposées de la structure, cette structure d'aimant pouvant servir dans une machine électrique sur un rotor encadré par deux stators.

Avantageusement, un matériau monocouche ou multicouches est introduit dans l'espace entre le logement et l'aimant unitaire. Ce matériau peut être un plastique, un composite un matériau métallique d'enrobage des aimants unitaires comme du nickel ou du cuivre. Le matériau peut avoir été déposé sur l'aimant unitaire préalablement à son introduction dans le maillage en étant par exemple un matériau de revêtement ou peut avoir une action de solidarisation de l'aimant unitaire avec la maille qui le reçoit. L'invention concerne aussi un actionneur électrique linéaire ou rotatif, caractérisé en ce qu'il comprend une telle structure d'aimant unitaire ou plusieurs structures d'aimant, la ou les structures d'aimant formant un ensemble rectangulaire ou faisant partie d'un rotor rotatif autour de son centre, la ou les structures d'aimant étant disposées concentriquement au rotor.

Avantageusement, l'actionneur étant à flux axial, la structure d'aimant forme un unique aimant s'étendant sur l'actionneur.

Avantageusement, l'actionneur étant à flux axial, les structures d'aimant sont multiples en étant des pavés successifs formant des pôles d'aimant successifs alternés, les structures d'aimant étant logées dans au moins un support comportant des branches délimitant entre elles des logements recevant chacun une structure d'aimant respective.

Avantageusement, ledit au moins un support fait partie d'un rotor et est de forme discoïdale partiellement creux en comportant des branches s'étendant sensiblement radialement ou inclinées en direction radiale du rotor, ledit au moins un support discoïdal étant recouvert sur au moins une face par un disque de recouvrement en tant que moyens de maintien axial de consolidation du rotor.

La frette représente un moyen de maintien radial des structures d'aimant, les branches un moyen de maintien tangentiel dans le plan du rotor et le ou les disques de recouvrement un moyen de maintien axial des structures d'aimant.

Selon l'état de la technique, il était nécessaire de prévoir des moyens de maintien axial des aimants car les disques de recouvrement ne résistaient pas à la chaleur dégagée par les aimants. Ceci a été permis par les structures d'aimant composées d'une pluralité d'aimants unitaires qui dégagent moins de chaleur et permettent l'utilisation de disques de recouvrement.

Avantageusement, le rotor présente une couronne externe périphérique formant sa tranche, une frette étant réalisée sur la couronne externe périphérique en permettant de retenir les structures d'aimant.

Avantageusement, au moins deux structures d'aimant formant sensiblement une couronne sont séparées par une paroi au milieu du support de forme discoïdale.

L'invention concerne un procédé de fabrication d'une telle structure d'aimant caractérisé en ce qu'il comprend les étapes suivantes :
- découpe dans une tuile aimantée présentant une longueur, une largeur et une épaisseur formant trois dimensions de la tuile, de plusieurs aimants unitaires selon les trois dimensions de la tuile aimantée,
- positionnement et maintien des aimants unitaires à distance les uns des autres par introduction de chaque aimant unitaire dans un logement respectif associé d'un maillage, en laissant un espace entre ledit logement et ledit aimant unitaire,
- collage de chaque aimant unitaire par introduction d'une résine autour de l'aimant unitaire dans chaque logement,
- injection d'une couche de composite non conductrice autour du maillage et des aimants unitaires pour leur enrobage.

Avantageusement, quand la structure comprend deux séries empilées d'aimants unitaires, le procédé comprend l'étape de maintien des maillages des deux séries à distance l'un de l'autre afin d'injecter une couche de composite entre les deux maillages ou les maillages comprennent chacune une base, la base d'un maillage étant appliquée contre la base de l'autre maillage, les deux bases présentant une épaisseur suffisante pour espacer les aimants unitaires d'une série par rapport aux aimants unitaires de l'autre série.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1a est une représentation schématique d'une vue d'une face d'un rotor destiné à un actionneur électromagnétique à flux axial selon une première forme de réalisation de la présente invention,
- la figure 1b est une représentation schématique d'une vue agrandie de la partie cerclée référencée A à la figure 1a,
- la figure 1c est une représentation schématique d'une vue agrandie de la structure d'aimant composée du maillage et d'aimants unitaires,
- la figure 2a est une représentation schématique d'une vue en éclaté d'un premier mode de réalisation selon la présente invention d'un rotor destiné à un actionneur électromagnétique à flux axial,
- la figure 2b est une représentation schématique d'une vue en éclaté d'un deuxième mode de réalisation selon la présente invention d'un rotor destiné à un actionneur électromagnétique à flux axial,
- la figure 3 est une représentation schématique d'une vue en éclaté d'un mode de réalisation selon la présente invention d'un actionneur électromagnétique à flux radial,
- la figure 4 est une représentation schématique d'une vue en perspective d'un plot faisant office d'aimant unitaire dans une structure d'aimant selon la présente invention,
- les figures 5a et 5b sont des représentations schématiques de vues de dessus respectivement d'une structure d'aimant formant un unique aimant et d'un agrandissement d'une portion de cette structure d'aimant,
- les figures 6a et 6b sont des représentations schématiques respectivement d'une vue en perspective et d'une vue latérale d'un nid d'abeille pouvant réaliser le maillage entourant les plots formant des aimants unitaires dans une structure d'aimant selon la présente invention.

Les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier les dimensions des différentes pièces ne sont pas représentatives de la réalité.

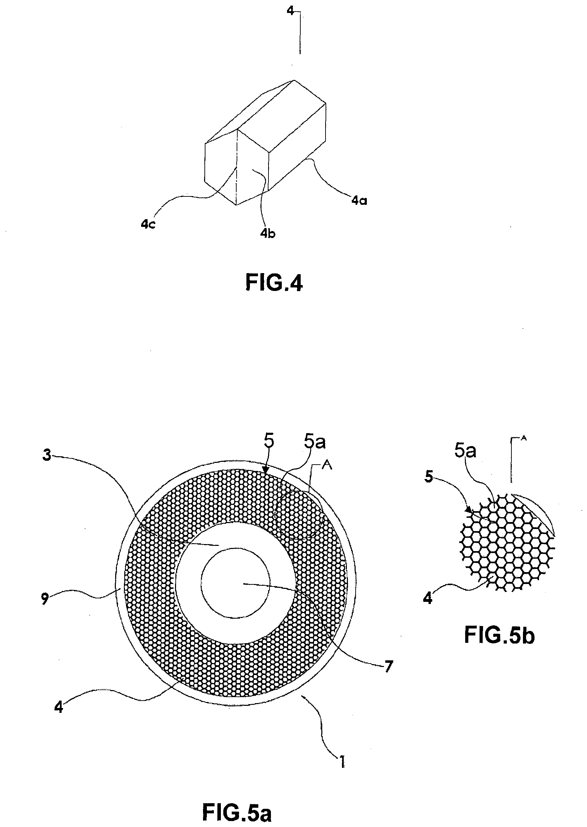

En se référant à toutes les figures et notamment aux figures 4, 5a, 5b, 6a et 6b en se reportant aussi aux autres figures pour les références manquantes à ces premières figures, la présente invention concerne une structure d'aimant 6 en trois dimensions constituée d'une pluralité d'aimants unitaires 4. La structure d'aimant 6 peut être sous la forme d'un pavé présentant une largeur, une longueur et une épaisseur, l'épaisseur formant la dimension la plus petite de la structure d'aimant 6.

Selon l'invention, la structure d'aimant 6 intègre au moins un maillage 5a présentant des mailles délimitant chacune un logement 5 ou alvéole pour un aimant unitaire 4 respectif. Chaque logement 5 présente des dimensions internes justes suffisantes pour permettre une introduction d'un aimant unitaire 4 en son intérieur tout en laissant un espace entre le logement 5 et l'aimant unitaire 4 rempli par une résine renforcée de fibres, les mailles étant en matériau isolant renforcé de fibres, cet espace étant rendu le plus petit possible pour un meilleur encadrement de chaque aimant unitaire.

Ceci permet d'assurer le maintien des aimants unitaires 4 dans leur logement 5 respectif même par vitesse de déplacement élevée, par exemple une vitesse de rotation élevée pour une ou des structures d'aimant 6 faisant partie d'un rotor 1, 1a, ce qui n'est pas limitatif.

Le maillage 5a peut être sous forme d'un nid d'abeille présentant des logements 5 de section hexagonale. Dans ce cas, chaque aimant unitaire 4 peut être sous la forme d'un plot 4 allongé pénétrant en longueur dans son logement 5 associé s'étendant selon l'épaisseur de la structure d'aimant 6.

Selon une caractéristique préférentielle de l'invention, chaque aimant unitaire 4 peut être sous la forme d'un plot 4 allongé, visible notamment à la figure 4, en présentant une longueur 4a s'étendant selon l'épaisseur de la structure d'aimant 6. Le plot 4 allongé peut être cylindrique ou sous la forme d'un polyèdre avec au moins une face longitudinale 4b plane orientée vers une surface de travail de la structure d'aimant 6 qui est la surface en vis à vis des bobinages dans un actionneur électromagnétique rotatif ou linéaire.

Par exemple, sans que cela soit limitatif, les aimants unitaires 4 peuvent être des aimants néodyme fer bore ou samarium cobalt ou tout autre type d'aimants. Les aimants en néodyme sont sensibles aux chocs et à la torsion et peuvent facilement s'enflammer. En diminuant leurs dimensions par division, la présente invention permet d'éviter tous ces risques et notamment les risques de casse des aimants. Leur maintien dans des alvéoles les protège aussi.

Quand le maillage 5a est sous forme d'un nid d'abeille, chaque plot 4 présente une face longitudinale 4b de forme hexagonale.

La structure d'aimant 6 comporte une couche de composite non conductrice enrobant les aimants unitaires 4 et le maillage 5a. Le maintien des aimants unitaires 4 est donc assuré par le maillage 5a avec interposition d'une résine renforcée de fibres entre chaque aimant unitaire et la maille le recevant puis par une couche de composite revêtant l'ensemble, ce qui confère à une structure d'aimant 6 une tenue mécanique optimale. Tout le contour de la structure d'aimant 6 peut être délimité par cette couche composite.

L'aimant unitaire 4 peut être revêtue d'un matériau monocouches ou multicouches concourant ou non à son adhésion à l'intérieur de la maille le recevant.

Le composite préférentiellement ne contient pas de fer pour ne pas induire de couple de détente ou de pertes supplémentaires.

La couche de composite peut comprendre des fibres de renforcement comme des fibres de verre ou des fibres en matière plastique. La couche de composite peut comprendre des fibres de renforcement comme des fibres de verre ou des fibres en matière plastique, par exemple en kevlar ou en polyamide ou toute matière plastique augmentant la résistance mécanique de l'ensemble.

Avantageusement, la structure d'aimant 6 comprend un empilement de deux séries d'aimants unitaires 4 avec chacun un maillage 5a respectif.

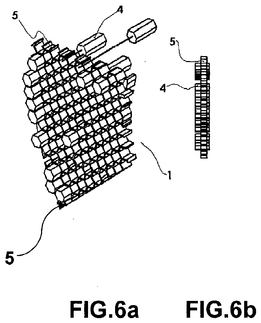

Un maillage 5a pris isolément de la structure d'aimant 6 est montré aux figures 6a et 6b. Les logements 5 ou alvéoles n'entourent pas leur plot 4 associé sur toute sa longueur.

Ainsi, dans le cadre d'une réalisation préférentielle de l'invention, la couche d'enrobage en composite, le maillage 5a entourant les aimants unitaires 4 et les moyens de collage des aimants dans les logements 5 du maillage 5a peuvent être tous les trois renforcés par des fibres. La structure d'aimant 6 ainsi obtenue présente des caractéristiques mécaniques de résistance à la rupture très élevées.

Dans un premier mode de réalisation préférentielle non montrée aux figures, la structure d'aimant 6 peut comprendre un empilement de deux séries d'aimants unitaires 4, chaque aimant unitaire 4 d'une série étant aligné dans le sens de sa longueur avec un aimant unitaire 4 respectif de l'autre série en étant mis bout à bout. Chaque paire de deux aimants unitaires 4 de séries différentes collés bout à bout par affinité magnétique peut se comporter comme un aimant simple plus long.

Les deux maillages 5a des deux séries font partie d'un même ensemble, les maillages 5a étant disposés l'un par rapport à l'autre de sorte que chaque aimant unitaire 4 d'une série soit aligné dans le sens de sa longueur avec un aimant unitaire 4 respectif de l'autre série en étant mis bout à bout.

Dans un deuxième mode de réalisation préférentielle non montrée aux figures, la structure d'aimant 6 peut comprendre un empilement de deux séries de plusieurs aimants unitaires 4, les deux séries étant empilées l'une sur l'autre, une couche de composite étant intercalée entre les deux séries empilées. Les deux séries empilées sont ainsi isolées électriquement l'une de l'autre.

Ceci permet d'avoir une structure d'aimant 6 pouvant présenter une surface de travail sur deux faces opposées de la structure d'aimant 6, cette structure d'aimant 6 pouvant par exemple servir dans un actionneur électromagnétique tournant pour un rotor 1, 1a encadré par deux stators.

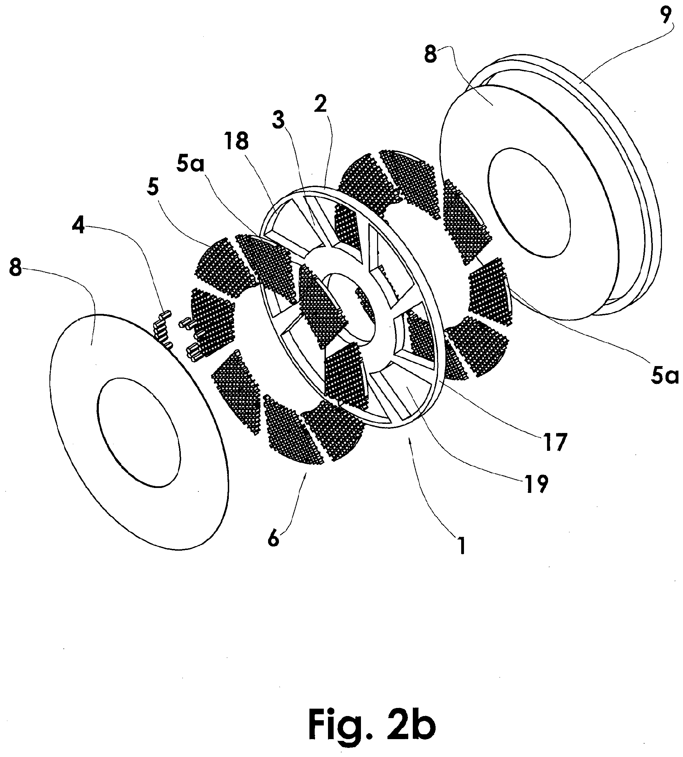

Par exemple, à la figure 2b, les deux séries d'aimants unitaires 4 de chaque structure d'aimant 6 dont une seule est référencée 6 à cette figure peuvent former des structures d'aimant 6 à deux séries d'aimants enrobées dans la même couche composite, une série étant isolée électriquement par rapport à l'autre série.

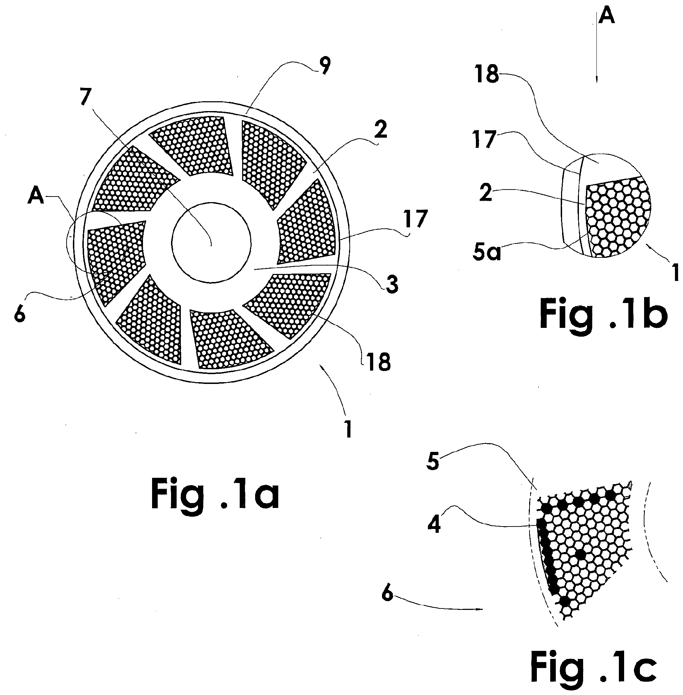

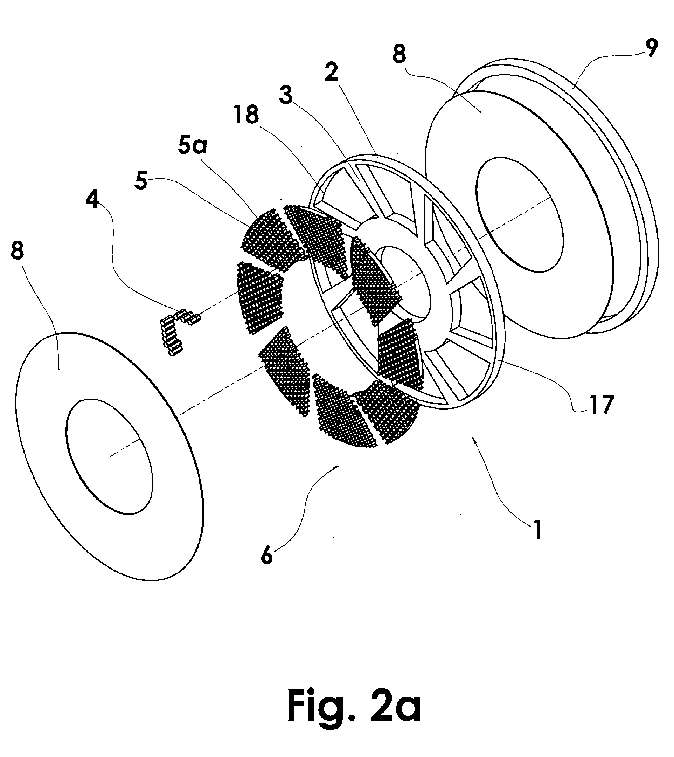

L'invention concerne aussi un actionneur électromagnétique linéaire ou rotatif. L'actionneur comprend une structure d'aimant 6 unitaire ou plusieurs structures d'aimant 6 telles que précédemment décrites. Dans ce dernier cas, les structures d'aimant 6 sont séparées les unes des autres par des branches 3. L'invention concerne aussi un actionneur électromagnétique linéaire ou rotatif, seul un actionneur électromagnétique rotatif étant montré aux figures 1a, 2a. Cet actionneur peut être à flux radial, à flux axial ou à une combinaison des deux.

La ou les structures d'aimant 6 peuvent former un ensemble rectangulaire pour un actionneur linéaire, les structures d'aimant 6 étant disposées alignées les unes après les autres. La ou les structures d'aimant 6 peuvent faire partie d'un rotor 1, 1a tournant autour de son centre pour un actionneur rotatif, la ou les structures d'aimant 6 étant alors disposées concentriquement au rotor 1, 1a.

Le rotor 1, 1a pour un actionneur électromagnétique tournant ou le support en translation pour un actionneur linéaire peuvent aussi être en matériau composite renforcé de fibres.

Avantageusement, quand unitaire, la structure d'aimant 6 forme un unique aimant s'étendant sur l'actionneur. Ceci est montré à la figure 5a. Quand multiples, les structures d'aimant 6 sont des pavés successifs formant des pôles d'aimant successifs alternés. Ceci est montré notamment à la figure 2a.

L'invention concerne un procédé de fabrication d'une structure d'aimant 6 telle que décrite précédemment. Le procédé de fabrication comprend une première étape de découpe dans une tuile aimantée présentant une longueur, une largeur et une épaisseur formant trois dimensions de la tuile. La découpe donne plusieurs aimants unitaires 4 selon les trois dimensions de la tuile aimantée.

La deuxième étape concerne le positionnement et le maintien des aimants unitaires 4 à distance les uns des autres par introduction de chaque aimant unitaire 4 dans un logement 5 respectif associé d'un maillage 5a.

La troisième étape concerne le collage de chaque aimant unitaire 4 par introduction d'une résine autour de l'aimant unitaire 4 dans chaque logement 5.

La quatrième étape concerne une injection d'une couche de composite autour du maillage 5a et des aimants unitaires 4 pour leur enrobage.

Avantageusement, quand la structure d'aimant 6 comprend deux séries empilées d'aimants unitaires 4, le procédé comprend l'étape de maintien des maillages 5a des deux séries à distance l'un de l'autre afin d'injecter une couche de composite entre les deux maillages 5a et d'isoler les aimants unitaires d'une série par rapport aux aimants unitaires de l'autre série.

En alternative, les maillages 5a peuvent comprendre chacun une base, la base d'un maillage 5a étant appliquée contre la base de l'autre maillage 5a, les deux bases présentant une épaisseur suffisante pour espacer les aimants unitaires 4 d'une série par rapport aux aimants unitaires 4 de l'autre série.

En se référant aux figures 1a à 1c, 2a, 2b et 3, il est montré un rotor 1, 1a d'un actionneur électromagnétique présentant au moins un support 2, 2a logeant une pluralité d'aimants unitaires 4. Il peut par exemple y avoir un support 2, 2a de chaque côté du rotor ou à l'intérieur du rotor, selon que le rotor est à flux axial ou à flux radial.

Ledit au moins un support 2, 2a comporte des branches 3, 3a délimitant entre elles des cavités recevant chacun une structure d'aimant 6 respective pouvant être composée d'un maillage 5a comprenant des logements ou alvéoles 5 et des aimants unitaires 4, chaque aimant unitaire 4 étant inséré dans un logement ou alvéole 5 respectif, la structure d'aimant 6 formant un pôle aimant ou un aimant entier. La figure 1c montre une vue agrandie par rapport à la figure 1a d'une telle structure d'aimant 6.

Le but de la présente invention est de remplacer un ou plusieurs aimants de taille importante par une pluralité de petits aimants unitaires 4. Il y a donc une création de flux magnétique par une multitude de petits aimants unitaires 4 dont le nombre est d'au moins 20 et peut dépasser 100, voire nettement plus par structure d'aimant 6.

Un rotor de l'état de la technique pouvait comprendre de 1 à 5 aimants alors que la présente invention prévoit beaucoup plus d'aimants unitaires 4 de petite taille. Les petits aimants unitaires 4 selon la présente invention peuvent être insérés dans des logements ou alvéoles 5 respectives par un robot. Pour un rotor de taille moyenne, les petits aimants unitaires 4 dans le cadre de la présente invention peuvent avoir une dimension de 4 mm.

Dans une première forme de réalisation préférentielle de l'invention, le rotor est à flux radial, donc destiné à un moteur ou génératrice à flux radial. Dans cette forme de réalisation, ledit au moins un support 2a est de forme cylindrique en comportant des branches 3a.

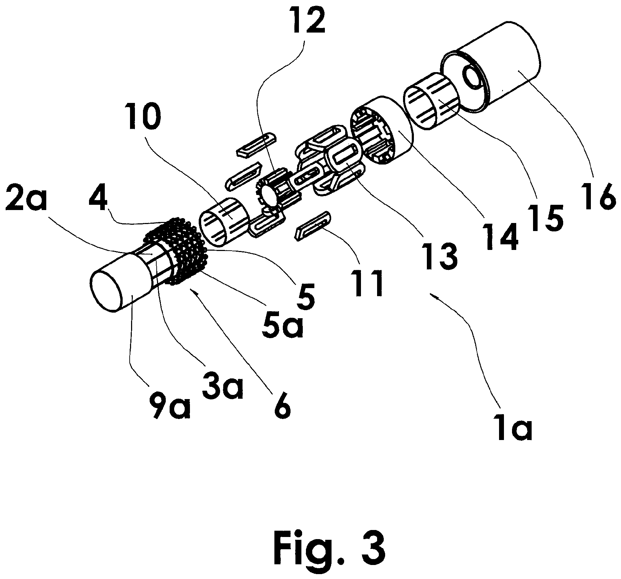

Dans le mode de réalisation montré à la figure 3, qui montre un actionneur électromagnétique à flux radial avec deux stators et un rotor 1a, le rotor 1a à flux radial de forme cylindrique présente un support cylindrique 2a présentant des branches de séparation 3a qui peuvent s'étendre axialement sur le support cylindrique 2a. Les branches de séparation 3a délimitent axialement des structures d'aimant 6 composées du maillage 5a et des aimants unitaires 4. Il se peut que le support cylindrique 2a soit creusé entre les branches de séparation 3a pour recevoir les structures d'aimant 6 composées du maillage alvéolaire 5a et des aimants unitaires 4.

Une frette 9a recouvre une extrémité du rotor 1a à proximité du support cylindrique 2a. A l'intérieur du support cylindrique 2a est inséré un cylindre de recouvrement intérieur 10 et à l'extérieur du support cylindrique 2a sur la périphérie externe du support cylindrique 2a s'étend un cylindre de recouvrement extérieur 15.

Un premier stator est disposé à l'intérieur du rotor 1a en présentant un circuit magnétique interne 12 portant des bobines 11. Le recouvrement intérieur 10 recouvre le circuit magnétique interne 12.

Un deuxième stator est disposé à l'extérieur du rotor 1a en l'entourant en présentant un circuit magnétique externe 14 intégrant en son intérieur des bobines 13. Le recouvrement extérieur 15 est disposé entre les bobines 13 et le circuit magnétique externe 14. Un carter 16 recouvre l'ensemble du rotor 1a et des deux stators.

Dans un autre mode de réalisation non montré à la figure 3, les branches peuvent être sous forme de couronnes se suivant espacées en direction axiale du support cylindrique. Les branches successives peuvent faire saillie radialement à la périphérie dudit au moins un support. Ledit au moins un support cylindrique peut être creusé pour présenter entre deux branches successives un logement pour la réception d'une unité composée de la structure alvéolaire et des aimants.

Les structures d'aimant 6 composées du maillage 5a et des aimants unitaires 4 utilisées pour un support cylindrique peuvent être chacune sous forme d'un anneau fermé ou de pavés disposés à distance les uns des autres Sinon l'aménagement de stators et de possibles cylindres de recouvrement ou frette d'extrémité dans l'actionneur à flux radial selon cet autre mode peut être similaire à celui montré à la figure 3. Cet autre mode de réalisation n'est pas préféré.

Dans une deuxième forme de réalisation préférentielle de l'invention, le rotor est à flux axial, donc destiné à un moteur ou génératrice à flux axial. Dans cette forme de réalisation, ledit au moins un support 2, 2a est de forme discoïdale et partiellement creux en comportant des branches 3, 3a s'étendant sensiblement radialement ou inclinées en direction radiale entre un pourtour interne 18, délimitant intérieurement un passage pour un arbre de rotation du rotor 1, et une couronne externe 17 du support 2 formant la couronne externe du support 2. Ceci est montré aux figures 1a, 1b, 2a et 2b.

Les branches 3, 3a peuvent être inclinées par rapport à l'arbre de rotation du rotor comme le sont des pales d'hélice et avoir une largeur grandissante, plus on s'éloigne du centre du support.

Le pourtour externe peut présenter des bords radialement recourbés vers l'intérieur du support 2 afin de former des butées axiales pour des portions d'extrémité de structures d'aimant 6 composées du maillage 5a alvéolaire et des aimants unitaires 4 introduites dans le pourtour externe 17.

Dans cette deuxième forme de réalisation, ledit au moins un support discoïdal 2a peut être recouvert sur au moins une face par un disque de recouvrement 8 en tant que moyens de maintien axial de consolidation du rotor. Ceci peut se faire sur les deux faces opposées par un disque de recouvrement 8 respectif. Un tel disque de recouvrement 8 peut être en matière composite et sert de moyen de maintien axial des aimants unitaires 4.

Dans cette deuxième forme de réalisation, le rotor 1, 1a peut présenter une couronne externe périphérique formant sa tranche, une frette 9 étant réalisée sur la couronne externe 17 périphérique en permettant de retenir les aimants unitaires 4 contre une force centrifuge.

Dans cette deuxième forme de réalisation, chaque structure d'aimant 6 composée du maillage 5a et des aimants unitaires 4 peut comprendre des logements ou alvéoles 5 traversantes ou non sur chaque face du support discoïdal 2a. Chacun des aimants unitaires 4 logés dans un logement ou alvéole 5 respective peut donc déboucher sur chaque face du support discoïdal 2a.

A la figure 2a, il est montré des branches 3 de séparation de deux unités adjacentes.

Comme il est visible à la figure 2b, au moins deux structures d'aimant 6 composées d'un maillage 5a et d'aimants unitaires 4 formant sensiblement une couronne peuvent être séparées par une paroi 19 au milieu du support de forme discoïdale 2. Les structures d'aimant 6 peuvent être des disques monopièces ou séparés par les branches 3a.

Ce qui va suivre peut être valable pour les deux modes de réalisation préférentielle de la présente invention.

Les structures d'aimant 6 composées chacune du maillage 5a et des aimants unitaires 4 peuvent être solidarisés audit au moins un support 2, 2a par des moyens de solidarisation à base de matériaux ferreux, de matériaux synthétiques ou composites.

Les moyens de solidarisation peuvent faire partie intégrante du rotor et/ou peuvent être des pièces rapportées solidaires du rotor. Les pièces rapportées peuvent être soudées, vissées, rivetées ou encliquetées avec le rotor 1, 1a. Il est possible de prévoir des moyens de solidarisation entre chaque aimant unitaire 4 et le logement ou alvéole 5 le recevant, ceci sur la face interne au logement ou alvéole 5 des parois de séparation 19 qui la délimite par rapport à des logements ou alvéoles 5 adjacents.

Dans chaque structure d'aimant 6 composée du maillage alvéolaire 5a et des aimants unitaires 4, les logements ou alvéoles 5 peuvent être délimitées par des parois de séparation 19, chaque aimant unitaire 4 étant solidarisé dans son logement ou alvéole 5 respective par de la résine.

Les aimants unitaires 4 et leurs logements ou alvéoles 5 respectives peuvent être de forme variable avec leurs pôles orientés dans des directions parallèles ou divergentes. Par exemple, les dimensions des logements ou alvéoles 5 peuvent différer d'un logement ou alvéole 5 à une autre. Les logements ou alvéoles 5 peuvent ne pas être obligatoirement de forme hexagonale bien que cela soit préféré.

L'actionneur électromagnétique peut comprendre au moins un stator portant au moins un bobinage, l'actionneur électromagnétique comprenant un ou plusieurs entrefers entre ledit au moins un rotor et ledit au moins un stator, d'un ou plusieurs stators portant le bobinage.

Chaque stator peut comporter un circuit magnétique associé à un bobinage. Le stator peut présenter des dents ou des encoches ouvertes ou fermées. Une carcasse permet de protéger le moteur ou la génératrice électromagnétique en tant qu'actionneur. Les stators peuvent être connectés en série ou en parallèle. Le décalage d'un stator d'un angle l'un par rapport à l'autre, combiné à la forme des encoches et à la forme des aimants unitaires 4, permet de réduire la variation de couple et le couple de détente.

L'actionneur pouvant être un moteur ou une génératrice électromagnétique peut fonctionner à des vitesses très élevées avec ou sans multiplicateur de vitesses. Le moteur ou la génératrice peut comprendre au moins deux stators connectés en série ou en parallèle ou au moins deux rotors.

Le rotor peut comprendre un arbre de rotation s'étendant perpendiculairement aux faces circulaires du rotor 1, 1a en traversant les deux stators. Le rotor 1, 1a peut être porté par au moins deux roulements, avec un roulement associé à un stator respectif pour permettre sa rotation par rapport aux stators.

## Revendications

1. Structure d'aimant (6) en trois dimensions constituée d'une pluralité d'aimants unitaires (4), la structure d'aimant (6) présentant une épaisseur formant sa dimension la plus petite, la structure d'aimant (6) intégrant au moins un maillage (5a) présentant des mailles délimitant chacune un logement (5) pour un aimant unitaire (4) respectif, chaque logement (5) présentant des dimensions internes justes suffisantes pour permettre une introduction d'un aimant unitaire (4) en son intérieur, les mailles étant en matériau isolant renforcé de fibres, **caractérisé en ce qu'**il est laissé un espace entre le logement (5) et l'aimant unitaire (4) rempli au moins par une résine renforcée de fibres, la structure d'aimant (6) comportant une couche de composite non conductrice enrobant les aimants unitaires (4) et le maillage (5a).

2. Structure d'aimant (6) selon la revendication précédente, dans laquelle ledit au moins un maillage (5a) est sous forme d'un nid d'abeille présentant des logements (5) de section hexagonale.

3. Structure d'aimant (6) selon l'une quelconque des deux revendications précédentes, dans laquelle chaque aimant unitaire est sous la forme d'un plot (4) allongé pénétrant en longueur dans son logement (5) associé s'étendant selon l'épaisseur de la structure d'aimant (6), le plot (4) allongé étant cylindrique ou sous forme d'un polyèdre avec au moins une face longitudinale (4b) plane et, quand ledit au moins un maillage (5a) est sous forme d'un nid d'abeille, chaque plot (4) présente une face longitudinale (4b) de forme hexagonale.

4. Structure d'aimant (6) selon l'une quelconque des revendications précédentes, dans laquelle la couche de composite comprend des fibres de renforcement comme des fibres de verre ou des fibres en matière plastique.

5. Structure d'aimant (6) selon l'une quelconque des revendications précédentes, laquelle comprend un empilement de deux séries d'aimants unitaires (4) avec chacun un maillage (5a) respectif.

6. Structure d'aimant (6) selon la revendication précédente, dans laquelle les deux maillages (5a) font partie d'un même ensemble, les maillages (5a) étant disposés l'un par rapport à l'autre de sorte que chaque aimant unitaire (4) d'une série soit aligné dans le sens de sa longueur avec un aimant unitaire (4) respectif de l'autre série en étant mis bout à bout.

7. Structure d'aimant (6) selon la revendication précédente, dans laquelle les deux maillages (5a) sont séparés avec une couche de composite intercalée entre les deux maillages (5a).

8. Structure d'aimant (6) selon l'une quelconque des revendications précédentes, dans lequel un matériau monocouche ou multicouches est introduit dans l'espace entre le logement (5) et l'aimant unitaire (4).

9. Actionneur électromagnétique linéaire ou rotatif, **caractérisé en ce qu'**il comprend une structure d'aimant (6) unitaire ou plusieurs structures d'aimant (6) selon l'une quelconque des revendications précédentes, la ou les structures d'aimant (6) formant un ensemble rectangulaire ou faisant partie d'un rotor (1, 1a) rotatif autour de son centre, la ou les structures d'aimant (6) étant disposées concentriquement au rotor (1, 1a).

10. Actionneur électromagnétique selon la revendication 9, dans lequel, l'actionneur étant à flux axial, la structure d'aimant (6) forme un unique aimant s'étendant sur l'actionneur.

11. Actionneur électromagnétique selon la revendication 9, dans lequel, l'actionneur étant à flux axial, les structures d'aimant (6) sont multiples en étant des pavés successifs formant des pôles d'aimant successifs alternés, les structures d'aimant (6) étant logées dans au moins un support (2, 2a) comportant des branches (3, 3a) délimitant entre elles des logements recevant chacun une structure d'aimant (6) respective.

12. Actionneur électromagnétique selon la revendication précédente, dans lequel ledit au moins un support (2, 2a) fait partie d'un rotor (1) et est de forme discoïdale partiellement creux en comportant des branches (3) s'étendant sensiblement radialement ou inclinées en direction radiale du rotor (1), ledit au moins un support discoïdal (2) étant recouvert sur au moins une face par un disque de recouvrement (8) en tant que moyens de maintien axial de consolidation du rotor (1).

13. Actionneur électromagnétique selon la revendication précédente, dans lequel le rotor (1) présente une couronne externe (17) périphérique formant sa tranche, une frette (9) étant réalisée sur la couronne externe (17) périphérique en permettant de retenir les structures d'aimant (6).

14. Actionneur électromagnétique selon l'une quelconque des deux revendications précédentes, dans lequel au moins deux structures d'aimant (6) formant sensiblement une couronne sont séparées par une paroi (19) au milieu du support de forme discoïdale (2).

15. Procédé de fabrication d'une structure d'aimant (6) selon l'une quelconque des revendications 1 à 8, **caractérisé en ce qu'**il comprend les étapes suivantes :
- découpe dans une tuile aimantée présentant une longueur, une largeur et une épaisseur formant trois dimensions de la tuile, de plusieurs aimants unitaires (4) selon les trois dimensions de la tuile aimantée,
- positionnement et maintien des aimants unitaires (4) à distance les uns des autres par introduction de chaque aimant unitaire (4) dans un logement (5) respectif associé d'un maillage (5a) en laissant un espace entre ledit logement (5) et ledit aimant unitaire (4),
- collage de chaque aimant unitaire (4) par introduction d'une résine autour de l'aimant unitaire (4) dans chaque logement,
- injection d'une couche de composite non conductrice autour du maillage (5a) et des aimants unitaires (4) pour leur enrobage.

16. Procédé selon la revendication précédente, dans lequel, quand la structure d'aimant (6) comprend deux séries empilées d'aimants unitaires (4), le procédé comprend l'étape de maintien des maillages (5a) des deux séries à distance l'un de l'autre afin d'injecter une couche de composite entre les deux maillages (5a) ou les maillages (5a) comprennent chacune une base, la base d'un maillage (5a) étant appliquée contre la base de l'autre maillage (5a), les deux bases présentant une épaisseur suffisante pour espacer les aimants unitaires (4) d'une série par rapport aux aimants unitaires (4) de l'autre série.

## Patentansprüche

1. Dreidimensionale Magnetstruktur (6), bestehend aus einer Vielzahl einzelner Magnete (4), wobei die Magnetstruktur (6) eine Dicke aufweist, die ihre kleineste Abmessung bildet, wobei die Magnetstruktur (6) mindestens ein Netzgehäuse (5a) integriert, das Maschen aufweist, von denen jede eine Aufnahme (5) für einen jeweiligen einzelnen Magnet (4) begrenzt, wobei jede Aufnahme (5) innere Abmessungen aufweist, die genau ausreichend sind, um ein Einsetzen eines einzelnen Magnets (4) in ihr Inneres zu gestatten, wobei die Maschen aus faserverstärktem Isoliermaterial sind, **dadurch gekennzeichnet, dass** ein Platz zwischen der Aufnahme (5) und dem einzelnen Magnet (4) gelassen ist, der mit mindestens einem faserverstärkten Harz gefüllt ist, wobei die Magnetstruktur (6) eine nicht leitende Kompositschicht aufweist, die die einzelnen Magnete (4) und das Netzgehäuse (5a) umhüllt.

2. Magnetstruktur (6) nach vorangehendem Anspruch, wobei das mindestens eine Netzgehäuse (5a) in Form einer Bienenwabe ist, die Aufnahmen (5) mit sechseckigem Querschnitt aufweist.

3. Magnetstruktur (6) nach einem der zwei vorangehenden Ansprüche, wobei jeder einzelne Magnet in Form eines länglichen Stifts (4) vorliegt, der in der Länge in seine zugeordnete Aufnahme (5) eindringt, die sich gemäß der Dicke der Magnetstruktur (6) erstreckt, wobei der längliche Stift (4) zylindrisch oder in Form eines Vielkants mit mindestens einer ebenen Längsfläche (4b) ist und, wenn das mindestens eine Netzgehäuse (5a) bienenwabenförmig ist, jeder Stift (4) eine sechseckige Längsfläche (4b) aufweist.

4. Magnetstruktur (6) nach einem der vorangehenden Ansprüche, wobei die Kompositschicht Verstärkungsfasern wie Glasfasern oder Kunststofffasern umfasst.

5. Magnetstruktur (6) nach einem der vorangehenden Ansprüche, die einen Stapel aus zwei Reihen einzelner Magnete (4) mit jeweils einem jeweiligen Netzgehäuse (5a) umfasst.

6. Magnetstruktur (6) nach vorangehendem Anspruch, wobei die zwei Netzgehäuse (5a) Teil derselben Anordnung sind, wobei die Netzgehäuse (5a) zueinander derart angeordnet sind, dass jeder einzelne Magnet (4) einer Reihe in Richtung seiner Länge mit einem jeweiligen einzelnen Magneten (4) der anderen Reihe mit den Enden aneinander liegend fluchtet.

7. Magnetstruktur (6) nach vorangehendem Anspruch, wobei die zwei Netzgehäuse (5a) mit einer zwischen den zwei Netzgehäusen (5a) zwischengestellten Kompositschicht getrennt sind.

8. Magnetstruktur (6) nach einem der vorangehenden Ansprüche, wobei ein einschichtiges oder mehrschichtiges Material in den Platz zwischen der Aufnahme (5) und dem einzelnen Magneten (4) eingesetzt ist.

9. Linearer oder rotierende elektromagnetischer Aktuator, **dadurch gekennzeichnet, dass** er eine einzelne Magnetstruktur (6) oder mehrere Magnetstrukturen (6) nach einem der vorangehenden Ansprüche umfasst, wobei die Magnetstruktur(en) (6) eine rechteckige Anordnung bildet/bilden oder Teil eines Rotors (1, 1a) ist/sind, der um sein Zentrum rotiert, wobei die Magnetstruktur(en) (6) konzentrisch zum Rotor (1, 1a) angeordnet ist/sind.

10. Elektromagnetischer Aktuator nach Anspruch 9, wobei, wobei der Aktuator ein Axialflussaktuator ist, die Magnetstruktur (6) einen einzigen Magnet bildet, der sich auf dem Aktuator erstreckt.

11. Elektromagnetischer Aktuator nach Anspruch 9, wobei, wobei der Aktuator ein Axialflussaktuator ist, die Magnetstrukturen (6) multipel sind, wobei sie aufeinanderfolgende Blöcke sind, die alternierende aufeinanderfolgende Magnetpole bilden, wobei die Magnetstrukturen (6) in mindestens einem Halter (2, 2a) untergebracht sind, der Schenkel (3, 3a) aufweist, die zwischen sich Aufnahmen begrenzen, von denen jede eine jeweilige Magnetstruktur (6) empfängt.

12. Elektromagnetischer Aktuator nach vorangehendem Anspruch, wobei der mindestens eine Halter (2, 2a) Teil eines Rotors (1) ist und eine teilweise hohle Scheibenform hat, indem er Schenkel (3) hat, die sich etwa radial oder geneigt in radialer Richtung des Rotors (1) erstrecken, wobei der mindestens eine scheibenförmige Halter (2) auf mindestens einer Fläche von einer Abdeckscheibe (8) als axiales Haltemittel zur Konsolidierung des Rotors (1) bedeckt ist.

13. Elektromagnetischer Aktuator nach vorangehendem Anspruch, wobei der Rotor (1) einen peripheren äußeren Kranz (17) aufweist, der seine Kante bildet, wobei ein Mantelring (9) auf dem peripheren äußeren Kranz (17) ausgebildet ist, der gestattet, die Magnetstrukturen (6) zu halten.

14. Elektromagnetischer Aktuator nach einem der zwei vorangehenden Ansprüche, wobei mindestens zwei Magnetstrukturen (6), die etwa einen Kranz bilden, durch eine Wand (19) in der Mitte des scheibenförmigen Halters (2) getrennt sind.

15. Verfahren zur Herstellung einer Magnetstruktur (6) nach einem der Ansprüche 1 bis 8, **dadurch gekennzeichnet, dass** es die folgenden Schritte umfasst:
- Ausschneiden, aus einer magnetisierten Platte, die eine Länge, eine Breite und eine Dicke aufweist, die drei Abmessungen der Platte bilden, mehrerer einzelner Magnete (4) gemäß den drei Abmessungen der magnetisierten Platte,
- voneinander beabstandetes Positionieren und Halten der einzelnen Magnete (4) durch Einsetzen jedes einzelnen Magnets (4) in eine jeweilige Aufnahme (5), die einem Netzgehäuse (5a) zugeordnet ist, mit einem Platz zwischen der Aufnahme (5) und dem einzelnen Magnet (4),
- Verkleben jedes einzelnen Magnets (4) durch Einleiten eines Harzes um den einzelnen Magnet (4) in jeder Aufnahme,
- Einspritzen einer nichtleitenden Kompositschicht um das Netzgehäuse (5a) und einzelne Magnete (4) für deren Umhüllung.

16. Verfahren nach vorangehendem Anspruch, wobei, wenn die Magnetstruktur (6) zwei gestapelte Reihen einzelner Magnete (4) umfasst, das Verfahren den Schritt des Haltens der Netzgehäuse (5a) der zwei Reihen voneinander beabstandet umfasst, um eine Kompositschicht zwischen die zwei Netzgehäuse (5a) einzuspritzen oder jedes Netzgehäuse (5a) eine Basis umfasst, wobei die Basis eines Netzgehäuses (5a) an der Basis des anderen Netzgehäuses (5a) anliegt, wobei die zwei Basen eine Dicke aufweisen, die ausreichend ist, um die einzelnen Magnete (4) einer Reihe in Bezug auf die einzelnen Magnete (4) der anderen Reihe zu beabstanden.

## Claims

1. Three-dimensional magnet structure (6) formed of a plurality of single magnets (4), the magnet structure (6) having a thickness forming the smallest dimension thereof, the magnet structure (6) integrating at least one meshwork (5a) having meshes each delimiting a housing (5) for a respective single magnet (4), each housing (5) having inner dimensions just sufficient for allowing an introduction of a single magnet (4) therein, the meshes being made of fibre-reinforced insulating material, **characterised in that** a space is left between the housing (5) and the single magnet (4) filled at least by a fibre-reinforced resin, the magnet structure (6) including a non-conductive composite layer coating the single magnets (4) and the meshwork (5a).

2. Magnet structure (6) according to the preceding claim, wherein said at least one meshwork (5a) is in the form of a honeycomb having housings (5) of hexagonal cross-section.

3. Magnet structure (6) according to any one of the two preceding claims, wherein each single magnet is in the form of an elongated stud (4) penetrating in length in the associated housing (5) thereof extending along the thickness of the magnet structure (6), the elongated stud (4) being cylindrical or in the form of a polyhedron with at least one flat, longitudinal face (4b) and, when said at least one meshwork (5a) is in the form of a honeycomb, each stud (4) has a hexagonally-shaped longitudinal face (4b).

4. Magnet structure (6) according to any one of the preceding claims, wherein the composite layer comprises reinforcing glass fibres or plastic material fibres.

5. Magnet structure (6) according to any one of the preceding claims, which comprises a stack of two series of single magnets (4) each with a respective meshwork (5a).

6. Magnet structure (6) according to the preceding claim, wherein the two meshworks (5a) are part of one same assembly, the meshworks (5a) being disposed against one another such that each single magnet (4) of a series is aligned in the direction of the length thereof with a respective single magnet (4) of the other series by being put end-to-end.

7. Magnet structure (6) according to the preceding claim, wherein the two meshworks (5a) are separated with a composite layer inserted between the two meshworks (5a).

8. Magnet structure (6) according to any one of the preceding claims, wherein a single-layer or multilayer material is introduced in the space between the housing (5) and the single magnet (4).

9. Linear or rotary electromagnetic actuator, **characterised in that** it comprises a single magnet structure (6) or several magnet structures (6) according to any one of the preceding claims, the magnet structure(s) (6) forming a rectangular assembly or being part of a rotor (1, 1a) rotating about the centre thereof, the magnet structure(s) (6) being disposed concentrically to the rotor (1, 1a).

10. Electromagnetic actuator according to claim 9, wherein, the actuator being an axial flow actuator, the magnet structure (6) forms one single magnet extending over the actuator.

11. Electromagnetic actuator according to claim 9, wherein, the actuator being an axial flow actuator, the magnet structures (6) are multiple by being successive pads forming successive alternated magnet poles, the magnet structures (6) being housed in at least one support (2, 2a) including branches (3, 3a) delimiting therebetween housings each receiving a respective magnet structure (6).

12. Electromagnetic actuator according to the preceding claim, wherein said at least one support (2, 2a) is part of a rotor (1) and is of partially hollow discoidal shape by including branches (3) extending substantially radially in the radial direction of the rotor (1), said at least one discoidal support (2) being covered on at least one face by a covering disc (8) as axial consolidation maintaining means of the rotor (1).

13. Electromagnetic actuator according to the preceding claim, wherein the rotor (1) has an outer, peripheral crown (17) forming the edge thereof, a fret (9) being made on the outer, peripheral crown (17) by allowing to retain the magnet structures (6).

14. Electromagnetic actuator according to any one of the two preceding claims, wherein at least two magnet structures (6) substantially forming a crown are separated by a wall (19) at the middle of the support of discoidal shape (2).

15. Method for manufacturing a magnet structure (6) according to any one of claims 1 to 8, **characterised in that** it comprises the following steps:
- cutting in a magnetised tile having a length, a width and a thickness forming three dimensions of the tile, of several single magnets (4) along the three dimensions of the magnetised tile,
- positioning and maintaining the single magnets (4) at a distance from one another by introducing each single magnet (4) in an associated respective housing (5) of a meshwork (5a) by leaving a space between said housing (5) and said single magnet (4),
- gluing each single magnet (4) by introducing a resin around the single magnet (4) in each housing,
- injecting a non-conductive composite layer around the meshwork (5a) and the single magnets (4) for the coating thereof.

16. Method according to the preceding claim, wherein, when the magnet structure (6) comprises two stacked single magnet (4) series, the method comprises the step of maintaining meshworks (5a) of the two series at a distance from one another in order to inject a composite layer between the two meshworks (5a) or the meshworks (5a) each comprise a base, the base of a meshwork (5a) being applied against the base of the other meshwork (5a), the two bases having a sufficient thickness to space apart the single magnets (4) of a series with respect to the single magnets (4) of the other series.
